# EUROPÄISCHE PATENTSCHRIFT

(11) **EP 1 604 445 B1**
(45) Veröffentlichungstag und Bekanntmachung des Hinweises auf die Patenterteilung: **25.05.2011**
(21) Anmeldenummer: 04714264.1
(22) Anmeldetag: 25.02.2004
(51) Int. Cl.: H02K 33/18, H02K 16/00

(54) **MAGNETISCHER LINEARANTRIEB**
MAGNETIC LINEAR DRIVE
ENTRAINEMENT LINEAIRE MAGNETIQUE

(30) Priorität: 17.03.2003 DE 10313144
(43) Veröffentlichungstag der Anmeldung: 14.12.2005
(73) Patentinhaber: SIEMENS AKTIENGESELLSCHAFT, 80333 München (DE)
(72) Erfinder: PROTZE, Carsten, 01307 Dresden (DE)
(86) Internationale Anmeldenummer: PCT/DE2004/000366
(87) Internationale Veröffentlichungsnummer: WO 2004/084387

(56) Entgegenhaltungen:
- WO-A-96/36982
- US-A- 3 550 052
- US-A- 4 340 846

## Beschreibung

Die Erfindung bezieht sich auf einen magnetischer Linearantrieb mit einer Basis und einem längs einer Achse bewegbaren ersten bewegbaren Teil, wobei zwischen der Basis und dem ersten bewegbaren Teil eine erste magnetische Kraftwirkung zur Bewegung des ersten bewegbaren Teils erzeugbar ist und zwischen dem ersten bewegbaren Teil und einem längs der Achse bewegbaren zweiten bewegbaren Teil eine zweite magnetische Kraftwirkung zur Bewegung des zweiten bewegbaren Teils erzeugbar ist wobei die Bewegung des ersten Gewegbaren Teils und die Bewegung des zweiten Gewegbaren Teils Teilhübe einer gesamtbewegung Sind und das zweite bewegbare Teil and dem ersten bewegbaren Teil gelagest ist.

Ein derartiger magnetischer Linearantrieb ist beispielsweise aus der europäischen Patentschrift EP 0 830 699 B1 bekannt. Die bekannte Anordnung weist eine Spule auf, welche von einem Strom durchfließbar ist. Unter Nutzung der Kraftwirkungen auf permeable Grenzflächen wird durch das von der Spule ausgehende magnetische Feld eine Antriebsstange bewegt. Die Antriebsstange taucht dabei in das Innere der Spule ein.

Je nach Eintauchtiefe der Antriebsstange in die Spule verändert sich die Kraftwirkung auf das bewegbare Teil. Der Hub eines derartigen Linearantriebes ist begrenzt.

Ein weiterer magntischer Linearanhieb ist beispielsweise aus der schweizerischen Patenhchnift CH 184 977 bekannt. Der bekannt Linearantrieb weist mehrere wicklungen auf in welche bei einer Bestromung der wicklungen ein Anker eingezogen wird. Der bekannte Anker ist mehrteilig ausgeführt, wobei jedes Teil des Ankers in einer Führungs hülse gelagert ist, welche an einem gehäuse der wicklungen begestigt ist. Die einzelnen Teile des Ankers sind relativ weinander bewegbar, jidoch nur um einen bestimmten Behag, welcher durch einel Lufgpalt bestimmt ist.

Ein anderer magnetischer Linearantrieb ist in der Patentschrift US 4,340,846 beschrieben. Bei diesem Linearantrieb sind zwei bewegbare Teile vorhanden, die durch eine starre Stange miteinander verbunden sind. Dies führt dazu, dass bei Bewegung des einen bewegbaren Teils das andere bewegbare Teil entsprechend mitbewegt wird.

Der vorliegenden Erfindung liegt die Aufgabe zugrunde, einen magnetischen Linearantrieb der eingangs genannten Art so auszubilden, dass bei einem großen Hub des bewegbaren Teiles eine einfache Steuerung des Bewegungsablaufes ermöglicht ist.

Weiterhin ist ein geeignetes Verfahren zum Betrieb eines derartigen magnetischen Linearantriebes anzugeben.

Die Aufgabe wird bei einem magnetischen Linearantrieb der eingangs genannten Art erfindungsgemäß durch die Merkmale des Patentanspruches 1 gelöst.

Durch das Vorsehen zweier Bewegungen zweier voneinander unabhängig bewegbarer Teile ist eine vereinfachte Steuerung eines Bewegungsablaufes ermöglicht. Durch ein Beschleunigen oder gezieltes Abbremsen jeweils eines der bewegbaren Teile oder einer entsprechenden Überlagerung der Bewegungen der beiden bewegbaren Teile lassen sich eine Vielzahl von Bewegungsprofilen erstellen. Weiterhin ist es auch möglich, lediglich nur eines der bewegbaren Teile anzutreiben, so dass nur ein begrenzter Hub durch den magnetischen Linearantrieb erzeugbar ist. Weiterhin kann durch die Aufteilung in Teilhübe eines ersten bewegbaren Teiles und eines zweiten bewegbaren Teiles ein besserer Kraftverlauf während der Gesamtbewegung erzeugt werden. Die Kräfte, welche zwischen dem ersten bewegbaren Teil und dem zweiten bewegbaren Teil sowie zwischen der Basis und dem ersten bewegbaren Teil zu erzeugen sind, können jeweils unabhängig voneinander erzeugt werden. Der Gesamtkraftbedarf für eine Bewegung kann so auf mehrere Elemente verteilt werden. So kann jede Kraftwirkung für sich nach Betrag und zeitlichem Verlauf optimiert werden, ohne dabei unmittelbar die andere Kraftwirkung zu beeinflussen. In Summe ergänzen sich die beiden Kraftwirkungen zu einer resultierenden Kraftwirkung. Ein derartiger magnetischer Linearantrieb ist als Antrieb für einen Schalter der Mittel- oder Hochspannungstechnik, insbesondere für einen Leistungsschalter, einsetzbar.

Weiterhin ist vorgesehen dass die erste Kraftwirkung eine magnetische Kraftwirkung ist. Weiterhin kann auch vorteilhaft vorgesehen sein, dass die zweite Kraftwirkung eine magnetische Kraftwirkung ist.

Magnetische Kraftwirkungen sind beispielsweise mit einer Kombination von stromdurchflossenen Spulen, Permanentmagneten und hochpermeablen Material erzeugbar. Magnetische Kraftwirkungen lassen sich leicht an die technischen Erfordernisse anpassen. Zur Übertragung der Kräfte sind dabei robuste mechanische Konstruktionen wählbar, welche nur einem geringen mechanischen Verschleiß unterliegen.

Weiterhin ist vorgesehen dass das zweite bewegbare Teil an dem ersten bewegbaren Teil gelagert ist.

Eine Lagerung des zweiten bewegbaren Teiles an dem ersten bewegbaren Teil ermöglicht in einfacher Weise die Bewegungen der bewegbaren Teile miteinander zu koppeln. Das zweite bewegbare Teil kann sich an dem ersten bewegbaren Teil abstoßen und so in einfacher Weise entweder gleichzeitig mit dem ersten Teil oder zeitlich nach oder vor einer Bewegung des ersten Teiles bewegt werden. Gegenüber bekannten Konstruktionen ist bei einem vergrößerten Hub eine ausreichend große Kraftwirkung über die gesamte Wegstrecke der Gesamtbewegung erzeugbar.

Weiterhin ist vorgesehen , dass ein erster und ein zweiter Permanentmagnet derartig zueinander ausgerichtet sind, dass in einer Endlage des magnetischen Linearantriebes die magnetischen Flüsse des ersten Permanentmagneten und des zweiten Permanentmagneten sich innerhalb eines hochpermeablen mehrteiligen Kernkörpers entlang eines gemeinsamen Weges schließen.

Durch die Nutzung von Permanentmagneten zur Lagesicherung sind mechanische Verklinkungen des magnetischen Linearantriebes nicht notwendig. Vereinigen sich die von dem Permanentmagneten ausgehenden Feldlinien längs eines gemeinsamen Weges, so wird die von einem der Permanentmagneten ausgehende Haltekraft verstärkt. Gegenüber einem einzelnen, eine erhöhte Magnetkraft aufbringenden Permanentmagneten weisen mehrere magnetisch gekoppelte Permanentmagnete den Vorteil auf, dass sie entlang eines bevorzugten Weges verteilt angeordnet sein können. Dadurch ist es möglich, den geschlossenen Weg innerhalb eines hochpermeablen Kernkörpers gezielt zu beeinflussen und die Wegführung des magnetischen Flusses feiner festzulegen.

Vorteilhafterweise kann weiterhin vorgesehen sein, dass Erregerwicklungen winkelsteif zu dem ersten bewegbaren Teil angeordnet sind.

Die winkelsteife Anordnung von Erregerwicklungen an dem ersten bewegbaren Teil ermöglicht eine Konzentration der elektrisch anzusteuernden Erregerwicklungen an einem einzigen Teil. Dadurch ist es möglich, dass die Basis und das zweite bewegbare Teil keine elektrisch anzusteuernden Erregerwicklungen aufweisen müssen. Somit wird die Konstruktion eines derartigen magnetischen Linearantriebs vereinfacht.

Weiterhin kann vorgesehen sein, dass der zweite bewegbare Teil ein Tauchanker ist.

Für bestimmte Anwendungsfälle eines magnetischen Linearantriebes, beispielsweise zum Antrieb von Kontaktstücken eines Mittel- oder Hochspannungsleistungsschalters kann es beispielsweise vorgesehen sein, dass die von dem ersten bewegbaren Teil bewirkte Bewegung der Bewegung der Kontaktstücke dient und die Bewegung des zweiten bewegbaren Teiles der Komprimierung eines Anpresselementes dient, welches eine Anpresskraft auf die Kontaktstücke des Leistungsschalters bewirkt. Die zum Erzeugen der Anpresskraft notwendige Energie kann mittels eines einfachen Tauchankers erzeugt werden. Der Tauchanker ist äußerst robust und nahezu frei von mechanischem Verschleiß.

Eine weitere vorteilhafte Ausgestaltung kann vorsehen, dass jedem der bewegbaren Teile eine Erregerwicklung zugeordnet ist.

Durch die Zuordnung von Erregerwicklungen zu jedem der bewegbaren Teile ist die Steuerung eines Bewegungsablaufes in einfacher Weise ermöglicht. Durch die Dimensionierung der Erregerwicklung, beispielsweise durch eine Veränderung der Anzahl von Windungen ist jedes der bewegbaren Teile in seinem Kraft- bzw. Bewegungsverlauf leicht steuerbar. So können die zwischen dem ersten bewegten Teil und der Basis sowie zwischen dem ersten bewegten Teil und dem zweiten bewegten Teil erzeugbaren Kraftwirkungen in einfacher Weise eingestellt bzw. verändert werden.

Es ist vorgesehen, dass während einer Bewegung zumindest eines der bewegbaren Teile eine Auftrennung eines gemeinsam von einem ersten Permanentmagneten und einem zweiten Permanentmagneten gespeisten magnetischen Kreises innerhalb eines hochpermeablen mehrteiligen Körpers in getrennt gespeiste magnetische Kreise erfolgt.

Die gemeinsame Speisung eines magnetischen Kreises von einem ersten und einem zweiten Permanentmagneten ermöglicht es, zum einen eine sehr große Haltekraft durch die magnetische Kopplung zweier Permanentmagnete zu erzeugen. Zum anderen können nach einer Auftrennung die Permanentmagnete jeweils für sich zum Erzeugen von unabhängig voneinander wirkenden Haltekräften eingesetzt werden. So kann es je nach Stellung des magnetischen Linearantriebs auftreten, dass in einer bestimmten Position erhöhte Haltekräfte zu erzeugen sind und in einer anderen Position geringere Haltekräfte benötigt werden.

Weiterhin kann vergesehen sein , dass mittels einer Steuervorrichtung unter Nutzung zumindest einer der Erregerwicklungen die zeitliche Abfolge der Bewegungen des ersten und des zweiten bewegbaren Teiles beeinflusst wird.

Durch eine Erregerwicklung, welche gezielt angesteuert wird, ist es möglich, die innerhalb des magnetischen Linearantriebs auftretenden Kräfte gezielt zu verstärken oder gezielt zu schwächen. Dadurch besteht die Möglichkeit, die zum Antrieb der bewegbaren Teile vorgesehenen Erregerwicklungen ohne einen mechanischen Eingriff in das System in ihren Kraftwirkungen anzupassen. So können durch die mittels der Steuervorrichtung angesteuerte Erregerwicklung zusätzliche Beschleunigungskräfte oder eine Bremswirkung erzeugt werden. Dabei kann vorgesehen sein, dass ein und dieselbe Erregerwicklung während eines Bewegungsablaufes dem Antrieb eines bewegbaren Teiles dient und während eines anderen Bewegungsablaufes durch eine Steuervorrichtung angesteuert wird, um ein bremsendes oder beschleunigendes Magnetfeld zu erzeugen.

Im Folgenden wird die Erfindung anhand eines Ausführungsbeispiels in einer Zeichnung schematisch gezeigt und nachfolgend näher beschrieben.

Dabei zeigen die
- Figuren 1 bis 3: eine Bewegungsabfolge eines magnetischen Linearantriebes von einer Aus-Stellung in eine Ein-Stellung und die
- Figuren 4 bis 6: die Überführung des magnetischen Linear- antriebes von einer Ein-Stellung in eine Aus-Stellung.

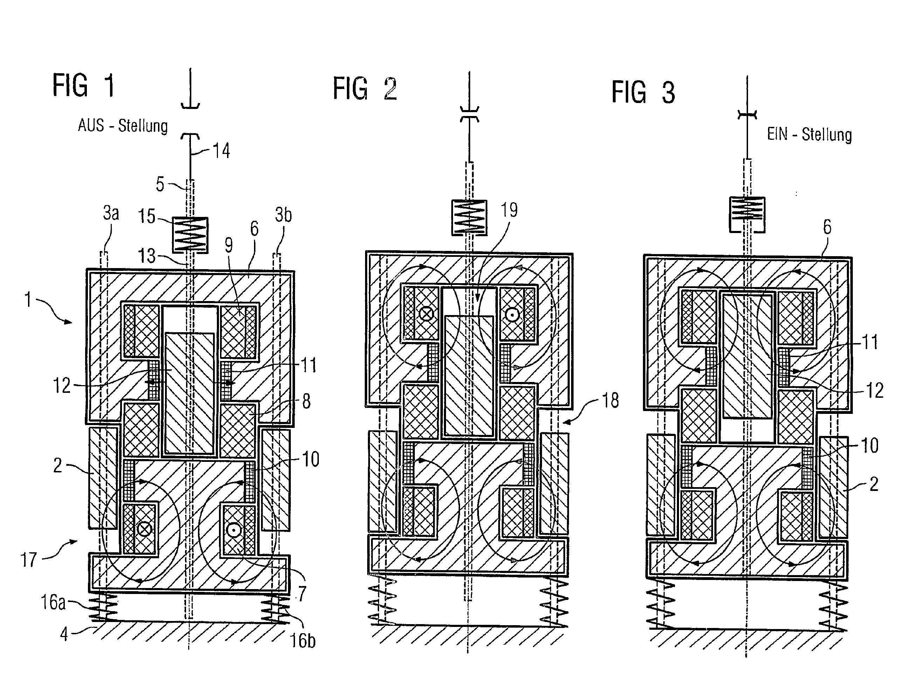

Zunächst wird anhand der Figur 1 der konstruktive Aufbau eines magnetischen Linearantriebes 1 beschrieben werden. Der magnetische Linearantrieb 1 weist eine Basis 2 auf. Die Basis 2 ist Teil eines hochpermeablen mehrteiligen Kernkörpers und ortsfest an Führungsstangen 3a,3b angeordnet. Die Führungsstangen 3a,3b sind auf einer Grundplatte 4 abgestützt. Die Führungsstangen 3a,3b erstrecken sich parallel zu einer Achse 5. Der magnetische Linearantrieb 1 ist im Wesentlichen koaxial zu der Achse 5 aufgebaut, kann aber auch spiegelsymmetrisch in einer Ebene ausgebildet sein. Ein erstes bewegbares Teil 6 ist auf den Führungsstangen 3a, 3b entlang der Achse 5 längenverschiebbar angeordnet. Das erste bewegbare Teil 6 ist ebenfalls Teil des hochpermeablen Kernkörpers. Das erste bewegbare Teil (fett umrandet) 6 weist eine Ausnehmung auf, in welche die Basis 2 eingreift, so dass die Längenverschiebbarkeit des ersten bewegbaren Teiles 6 entlang der Führungsstangen 3a,3b begrenzt ist. Das bewegbare Teil 6 weist eine erste Erregerwicklung 7, eine zweite Erregerwicklung 8 sowie eine dritte Erregerwicklung 9 auf. Die Erregerwicklungen 7, 8, 9 umgreifen jeweils mit ihrer Vielzahl von Windungen die Achse 5. Im Idealfall sind die Erregerwicklungen 7, 8, 9 koaxial zur Achse 5 angeordnet. Zwischen der ersten Erregerwicklung 7 und der zweiten Erregerwicklung 8 ist ein erster Permanentmagnet 10 angeordnet. Zwischen der zweiten Erregerwicklung 8 und der dritten Erregerwicklung 9 ist ein zweiter Permanentmagnet 11 angeordnet. Der erste Permanentmagnet 10 sowie der zweite Permanentmagnet 11 können dabei in unterschiedlichen konstruktiven Ausgestaltungen vorliegen. Beispielsweise können sie sich jeweils ringförmig um die Achse 5 erstrecken oder aus einer Vielzahl von Teilmagneten gebildet sein, welche in ihrer gemeinsamen Wirkung jeweils einen ersten und einen zweiten Permanentmagneten ergeben. Sowohl der erste Permanentmagnet 10 als auch der zweite Permanentmagnet 11 sind dabei derart magnetisiert und angeordnet, dass die Magnetisierungsrichtungen der Permanentmagnete 10, 11 radial zu der Achse 5 verlaufen. Das bewegbare Teil 6 weist im Bereich der zweiten Erregerwicklung 8 und der dritten Erregerwicklung 9 eine Ausnehmung auf, welche die zweite Erregerwicklung 8 und die dritte Erregerwicklung 9 durchsetzt. In der Ausnehmung ist ein Tauchanker 12 bewegbar gelagert. Der Tauchanker 12 stellt ein zweites bewegbares Teil dar. Der Tauchanker 12 ist winkelstarr mit einer Antriebsstange 13 verbunden, welche entlang der Achse 5 verschiebbar an dem ersten bewegbaren Teil 6 gelagert ist. Die Antriebsstange 13 ist an ein bewegbares Kontaktstück 14 einer elektrischen Kontaktanordnung angekoppelt. Eine derartige Kontaktanordnung ist beispielsweise ein Mittel- oder Hochspannungsleistungsschalter. Die Ankoppelung der Antriebsstange 13 an das bewegbare Kontaktstück 14 erfolgt unter Zwischenschaltung eines Kompressionselementes 15. Zur Dämpfung einer Ausschaltbewegung und zur Unterstützung einer Einschaltbewegung ist zwischen der Grundplatte 4 und dem ersten bewegbaren Teil 6 eine Anordnung mit mehreren Kompressionsfedern 16a,b vorgesehen. Die Kompressionsfedern 16a,b sind fakultative Elemente.

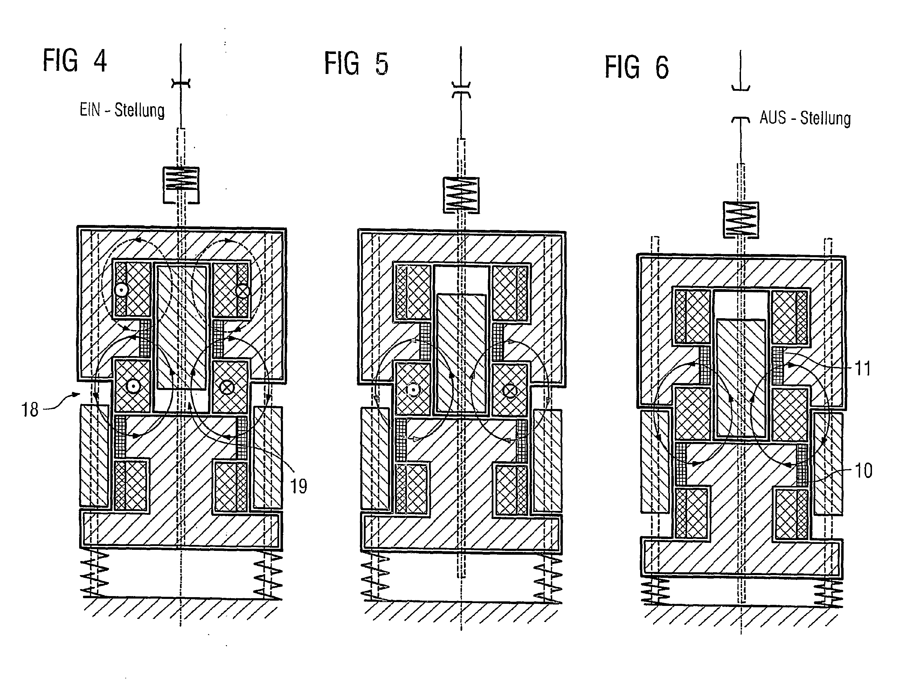

Im Folgenden wird anhand der Figuren 1, 2 und 3 ein Einschaltvorgang des magnetischen Linearantriebes 1 exemplarisch beschrieben. In der Aus-Stellung des magnetischen Linearantriebes 1 bilden die von dem ersten Permanentmagneten 10 und dem zweiten Permanentmagneten 11 ausgehenden magnetischen Feldlinien einen gemeinsamen magnetischen Kreis (siehe Figur 6). Der gemeinsame magnetische Kreis verläuft dabei durch einen mehrteiligen Kernkörper, welcher sowohl Teile der Basis 2, Teile des ersten bewegbaren Teiles 6 sowie Teile des Tauchankers 12 umfasst. Die Abschnitte, in welchen ein Magnetfluss zu führen ist, sind jeweils aus hochpermeablen Material gebildet. Durch die Koppelung der Magnetfelder des ersten Permanentmagneten 10 und des zweiten Permanentmagneten 11 ist eine vergrößerte Haltekraft des ersten bewegbaren Teiles 6 an der Basis 2 sowie des Tauchankers 12 an dem ersten bewegbaren Teil 6 gegeben. Um eine erste Kraftwirkung zwischen der Basis 2 und dem ersten bewegbaren Teil 6 zu erzeugen, ist die erste Erregerwicklung 7 mit einem Gleichstrom in einer ersten Richtung zu bestromen (Figur 1). Die erste Richtung des Gleichstromes muss dabei derart gewählt werden, dass der von dem ersten Permanentmagneten 10 ausgehende magnetische Fluss verstärkt wird. Das heißt, der bisher gemeinsam von dem ersten Permanentmagneten 10 und dem zweiten Permanentmagneten 11 gespeiste magnetische Kreis wird in ein Ungleichgewicht gebracht, wodurch zwischen dem ersten bewegbaren Teil 6 und der Basis 2 eine Kraftwirkung erzeugt wird. Im Zuge dieser Kraftwirkung wird ein zwischen der Basis 2 und dem ersten bewegbaren Teil 6 vorhandener Spalt 17 geschlossen. Gleichzeitig wird ein weiterer Spalt 18 geöffnet (vgl. Figur 1 nach Figur 2). Durch die Herstellung des weiteren Spaltes 18 wird der gemeinsam gespeiste magnetische Kreis innerhalb des mehrteiligen hochpermeablen Kernkörpers aufgetrennt und jeder der Permanentmagneten 10, 11 speist einen separaten magnetischen Kreis innerhalb eines hochpermeablen Kernkörpers (siehe Figur 2). Um eine Bewegung des Tauchankers 12 zu bewirken, ist die dritte Erregerwicklung 9 ebenfalls in einer ersten Richtung zu bestromen. Dadurch wird aufgrund der Kraftwirkung auf hochpermeable Grenzflächen eine Bewegung des Tauchankers 12 erzeugt und eine magnetische Lücke 19 geschlossen (vgl. Figur 2 nach Figur 3). Durch den Hub des Tauchankers 12 wird das bewegbare Kontaktstück 14 in seine Ein-Stellung geschoben. Weiterhin wird das Kompressionselement 15 komprimiert und aufgrund der Kraftwirkung des Kompressionselementes 15 wird das bewegbare Kontaktstück 14 mit der erforderlichen Anpresskraft gegen ein Gegenkontaktstück gepresst. In der Ein-Stellung (Figur 3) bewirkt der erste Permanentmagnet 10 eine Haltekraft des ersten bewegbaren Teiles 6 gegenüber der Basis 2. Der zweite Permanentmagnet 11 bewirkt eine Haltekraft des Tauchankers 12 gegenüber dem ersten bewegbaren Teil 6.

Anhand der Figuren 4, 5 und 6 wird im Folgenden eine Überführung des magnetischen Linearantriebes 1 von einer Ein-Stellung in eine Aus-Stellung beschrieben. Zum Erzeugen einer Ausschaltbewegung ist die zweite Erregerwicklung 8 in einer zweiten Richtung mit einem Gleichstrom zu bestromen. Der Gleichstrom muss dabei derartig gerichtet sein, dass die von den beiden Permanentmagneten ausgehenden magnetischen Flüsse verstärkt werden und so die Herstellung eines gemeinsamen Magnetkreises des ersten Permanentmagneten 10 und des zweiten Permanentmagneten 11 unterstützt und gefördert wird. Durch die magnetische Kraftwirkung zwischen dem bewegbaren Teil 6 und der Basis 2 wird eine Verringerung des weiteren Spaltes 18 bewirkt. Weiterhin wird die nunmehr im Bereich der zweiten Erregerwicklung 8 liegende magnetische Lücke 19 ebenfalls geschlossen. Zum Erzeugen einer Ausschaltbewegung ist lediglich ein Bestromen der zweiten Erregerwicklung 8 nötig. Die Bewegung des Tauchankers 12 und des ersten bewegbaren Teiles 6 erfolgt dann nahezu zeitgleich. Um den Bewegungsablauf der Bewegung des ersten bewegbaren Teiles 6 und des Tauchankers 12 zu koordinieren, kann es fakultativ vorgesehen sein, dass mittels einer Steuervorrichtung die dritte Erregerspule 9 ebenfalls in einer zweiten Richtung bestromt wird. Dadurch wird die Kraftwirkung auf den Tauchanker 12 verstärkt, da ein zu dem zweiten Permanentmagneten 11 entgegengesetzt gerichtetes Magnetfeld das Magnetfeld des Permanentmagneten 11 schwächt und so die Haltekräfte des Tauchankers 12 an dem ersten bewegbaren Teil 6 vermindert werden. Dadurch wird eine Bewegung des Tauchankers 12 vor einer Bewegung des ersten bewegbaren Teiles 6 erzwungen (vgl. Figur 4 nach Figur 5). Nachdem auch der erste bewegbare Teil aufgrund der Bestromung der zweiten Erregerwicklung 8 in seine Aus-Stellung bewegt wurde, ergänzen sich die von dem ersten Permanentmagneten 10 und dem zweiten Permanentmagneten 11 ausgehenden magnetischen Feldlinien zu einem gemeinsamen magnetischen Kreis, welcher in hochpermeablem Material eines von dem Tauchanker 12, den ersten bewegbaren Teil 6 sowie der Basis 2 gebildet ist. Durch den gemeinsamen magnetischen Kreis ist das erste bewegbare Teil 6 an der Basis 2 festgehalten und der Tauchanker 12 ist an dem ersten bewegbaren Teil 6 festgehalten.

## Patentansprüche

1. Magnetischer Linearantrieb (1) mit einer Basis (2) und einem längs einer Achse (5) bewegbaren ersten bewegbaren Teil (6), wobei zwischen der Basis (2) und dem ersten bewegbaren Teil (6) eine erste magnetische Kraftwirkung zur Bewegung des ersten bewegbaren Teils (6) erzeugbar ist und zwischen dem ersten bewegbaren Teil (6) und einem längs der Achse (5) bewegbaren zweiten bewegbaren Teil (12) eine zweite magnetische Kraftwirkung zur Bewegung des zweiten bewegbaren Teils (12) erzeugbar ist, wobei die Bewegung des ersten bewegbaren Teils (6) Und die Bewegung des zweiten bewegbaren Teils (12) Teilhübe einer gesamt bewegung sind und das zweite bewegbare Teil (12) an dem ersten bewegbaren teil (6) gelagert ist, **dadurch gekennzeichnet, dass** ein erster und ein zweiter Permanentmagnet (10, 11) zur Lagesicherung einer Endlage derartig zueinander ausgerichtet sind, dass in der Endlage des magnetischen Linearantriebes (1) die magnetischen Flüsse des ersten Permanentmagneten (10) und des zweiten Permanentmagneten (11) sich innerhalb eines hochpermeablen mehrteiligen Kernkörpers entlang eines gemeinsamen Weges schließen.

2. Magnetischer Linearantrieb (1) nach Anspruch 1, **dadurch gekennzeichnet, dass** der zweite bewegbare Teilein Tauchanker ist, der einer Ausnchmung des ersten bewegbaren teils (6) bewegbar gelagert ist.

3. Magnetischer Linearantrieb (1) nach einem der Ansprüche 1 oder 2,
**dadurch gekennzeichnet, dass** Erregerwicklungen (7,8,9) winkelsteif zu dem ersten bewegbaren Teil (6) angeordnet sind.

4. Magnetischer Linearantrieb (1) nach einem der Ansprüche 1 bis 3,
**dadurch gekennzeichnet, dass** jedem der bewegbaren Teile (6,12) eine Erregerwicklung (7, 8, 9) zugeordnet ist.

5. Verfahren zum Betrieb eines magnetischen Linearantriebes (1) nach einem der Ansprüche 1 bis 4,
**dadurch gekennzeichnet, dass** während einer Bewegung zumindest eines der bewegbaren Teile (6,12) eine Auftrennung eines gemeinsam von einem ersten Permanentmagneten (10) und einem zweiten Permanentmagneten (11) gespeisten magnetischen Kreises innerhalb eines hochpermeablen mehrteiligen Körpers in getrennt gespeiste magnetische Kreise erfolgt.

6. Verfahren zum Betrieb eines magnetischen Linearantriebes (1) nach Anspruch 5,
**dadurch gekennzeichnet, dass** mittels einer Steuervorrichtung unter Nutzung zumindest einer der Erregerwicklungen (7,8,9) die zeitliche Abfolge der Bewegungen des ersten und des zweiten bewegbaren Teiles (6,12) beeinflusst wird.

## Claims

1. Magnetic linear drive (1) having a base (2) and having a first movable part (6), which can be moved along an axis (5), wherein a first magnetic force effect for movement of the first movable part (6) can be produced between the base (2) and the first movable part (6), and a second magnetic force effect for movement of a second movable part (12) can be produced between the first movable part (6) and the second movable part (12), which can be moved along the axis (5), the movement of the first movable part (6) and the movement of the second movable part (12) being linear movement elements of an entire movement, and the second movable part (12) being mounted on the first movable part (6),
**characterized in that**
a first and a second permanent magnet (10, 11) are aligned, for securing the position of a limit position, with respect to one another in such a way that, in the limit position of the magnetic linear drive (1), the magnetic fluxes of the first permanent magnet (10) and of the second permanent magnet (11) are closed along a common path within a high-permeability multiple part core body.

2. Magnetic linear drive (1) according to Claim 1, **characterized in that** the second movable part is a plunger-type armature, which second movable part is mounted such that it can move in the recess of the first movable part (6).

3. Magnetic linear drive (1) according to one of Claims 1 or 2,
**characterized in that**
field windings (7, 8, 9) are arranged at a fixed angle with respect to the first movable part (6).

4. Magnetic linear drive (1) according to one of Claims 1 to 3,
**characterized in that**
each of the movable parts (6, 12) has an associated field winding (7, 8, 9) .

5. Method for operation of a magnetic linear drive (1) according to one of Claims 1 to 4,
**characterized in that**,
during any movement of at least one of the movable parts (6, 12), a magnetic circuit which is fed jointly by a first permanent magnet (10) and a second permanent magnet (11) is separated within a high-permeability multiple part body into magnetic circuits which are fed separately.

6. Method for operation of a magnetic linear drive (1) according to Claim 5,
**characterized in that**
the time sequence of the movements of the first and of the second movable part (6, 12) is influenced by means of a control apparatus, using at least one of the field windings (7, 8, 9).

## Revendications

1. Entraînement ( 1 ) linéaire magnétique comprenant une base ( 2 ) et une première pièce ( 6 ) mobile le long d'un axe ( 5 ), une première force magnétique pour déplacer la première pièce ( 6 ) mobile pouvant être produite entre la base ( 2 ) et la première pièce ( 6 ) mobile et une deuxième force magnétique pour déplacer une deuxième pièce ( 2 ) mobile pouvant être produite entre la première pièce ( 6 ) mobile et la deuxième pièce ( 12 ) mobile le long de l'axe ( 5 ), dans lequel le mouvement de la première pièce ( 6 ) mobile et le mouvement de la deuxième pièce ( 6 ) mobile sont des courses partielles d'un mouvement total et la deuxième pièce ( 12 ) mobile est montée sur la première pièce ( 6 ) mobile,
**caractérisé en ce que**
un premier et un deuxième aimants ( 10, 11 ) permanents sont orientés l'un par rapport à l'autre pour s'assurer d'une position d'extrémité, de manière à ce que, dans la position d'extrémité de l'entraînement ( 1 ) linéaire magnétique, les flux magnétiques du premier aimant ( 10 ) permanent et du deuxième aimant ( 11 ) permanent se ferment le long d'un trajet commun au sein d'un corps de noyau très perméable en plusieurs parties.

2. Entraînement ( 1 ) linéaire magnétique suivant la revendication 1,
**caractérisé en ce que**
la deuxième pièce mobile est un induit plongeur qui est monté mobile dans un évidement de la première ( 6 ) mobile.

3. Entraînement ( 1 ) linéaire magnétique suivant l'une des revendications 1 ou 2,
**caractérisé en ce que**
des enroulements ( 7, 8, 9 ) d'excitation sont montés à angle fixe par rapport à la première pièce ( 6 ) mobile.

4. Entraînement ( 1 ) linéaire magnétique suivant l'une des revendications 1 à 3,
**caractérisé en ce**
**qu'**un enroulement ( 7, 8, 9 ) d'excitation est associé à chacune des pièces ( 6, 12 ) mobiles.

5. Procédé pour faire fonctionner un entraînement ( 1 ) linéaire magnétique suivant l'une des revendications 1 à 4,
**caractérisé en ce que**
pendant un déplacement d'au moins l'une des pièces ( 6, 12 ) mobiles, il s'effectue une séparation d'un circuit magnétique alimenté conjointement par un premier aimant ( 10 ) permanent et par un deuxième aimant ( 11 ) permanent au sein d'un corps très perméable en plusieurs parties en des circuits magnétiques alimentés séparément.

6. Procédé pour faire fonctionner un entraînement ( 1 ) linéaire magnétique suivant la revendication 5,
**caractérisé en ce que**
au moyen d'un dispositif de commande et en utilisant au moins l'un des enroulements ( 7, 8, 9 ) d'excitation, on influe sur la succession dans le temps des déplacements de la première et de la deuxième pièce ( 6, 12 ) mobile.
